# FASCICULE DE BREVET EUROPEEN

(11) **EP 3 364 300 B1**
(45) Date de publication et mention de la délivrance du brevet: **20.04.2022**
(21) Numéro de dépôt: 18157523.4
(22) Date de dépôt: 20.02.2018
(51) Int. Cl.: G06F 9/50, H04L 12/28

(54) **PROCÉDÉ DE CONTRÔLE D'UNE INSTALLATION DOMOTIQUE, ÉQUIPEMENT ET INSTALLATION ASSOCIÉS**
VERFAHREN ZUM KONTROLLIEREN EINER HAUSTECHNIKANLAGE, ENTSPRECHENDE AUSSTATTUNG UND ENTSPRECHENDE ANLAGE
METHOD FOR CONTROLLING A HOME AUTOMATION INSTALLATION, ASSOCIATED EQUIPMENT AND INSTALLATION

(30) Priorité: 21.02.2017 FR 1751364
(43) Date de publication de la demande: 22.08.2018
(73) Titulaire: Freebox, 75008 Paris (FR)
(72) Inventeur: CERDAN, Sébastien, 92100 Boulogne Billancourt (FR)
(74) Mandataire: Lavoix

(56) Documents cités:
- THEMISTOKLIS BOURDENAS ET AL: "Starfish : policy driven self-management in wireless sensor networks", PROCEEDINGS OF THE 2010 ICSE WORKSHOP ON SOFTWARE ENGINEERING FOR ADAPTIVE AND SELF-MANAGING SYSTEMS, SEAMS '10, 3 mai 2010 (2010-05-03), pages 75-83, XP055421787, New York, New York, USA DOI: 10.1145/1808984.1808993 ISBN: 978-1-60558-971-8
- RENÉ MÜLLER ET AL: "A virtual machine for sensor networks", OPERATING SYSTEMS REVIEW, ACM, NEW YORK, NY, US, vol. 41, no. 3, 21 mars 2007 (2007-03-21), pages 145-158, XP058271752, ISSN: 0163-5980, DOI: 10.1145/1272998.1273013
- Niels Brouwers: "A Java Compatible Virtual Machine for Wireless Sensor Networks", master Thesis, Delft University of Technology, The Netherlands, 13 mai 2009 (2009-05-13), pages 1-65, XP055422962, Extrait de l'Internet: URL:https://repository.tudelft.nl/islandor a/object/uuid:d9ecf443-8e68-49bb-8f76-7776 0a7d2d57/datastream/OBJ/download [extrait le 2017-11-08]
- LEVIS P CULLER D: "Maté: a tiny virtual machine for sensor networks", OPERATING SYSTEMS REVIEW, ACM, NEW YORK, NY, US, vol. 36, no. 5, 5 octobre 2002 (2002-10-05), pages 85-95, XP002542281, ISSN: 0163-5980, DOI: 10.1145/635508.605407

## Description

La présente invention concerne un procédé de contrôle d'une installation domotique. La présente invention se rapporte également à un équipement domotique et à une installation domotique.

Dans le domaine de la domotique, le contrôle d'une pluralité d'équipements de l'habitat est centralisé. Parmi la pluralité d'équipements, le portail d'entrée, les illuminations ou les radiateurs sont des exemples typiques.

Le contrôle central permet une personnalisation de la commande de chacun des équipements qui serait fastidieuse à réaliser de manière locale.

Usuellement, le contrôle est assuré par un organe central bénéficiant d'un accès à un réseau global.

Toutefois, un tel contrôle est vulnérable aux dysfonctionnements de l'organe central. De fait, une panne de l'organe central empêche le fonctionnement de la pluralité d'équipements, ce qui peut s'avérer gênant à l'usage pour certains équipements comme le portail d'entrée.

Le document de l'état de la technique XP55421787 nommé "Starfish : policy driven self-management in wireless sensor networks" divulgue un réseau sans fil de capteurs capable de s'adapter à leurs contextes respectifs.

Le document de l'état de la technique XP058271752 nommé "A virtual machine for sensor networks" divulgue une machine virtuelle pour un réseau de capteur.

Il existe donc un besoin pour un procédé de contrôle d'une installation domotique présentant moins d'anomalies de fonctionnement.

A cet effet, il est proposé un procédé de contrôle d'une installation domotique, l'installation comportant des équipements domotiques et un organe de contrôle central, le procédé comportant une étape de fourniture d'un fonctionnement souhaité de l'installation, une étape de fourniture d'un premier fonctionnement de chaque équipement, une étape d'optimisation du fonctionnement de l'installation par modification du premier fonctionnement d'au moins un équipement, pour obtenir un deuxième fonctionnement dudit au moins un équipement et un fonctionnement de l'installation (conforme au fonctionnement souhaité, et une étape d'installation d'une machine virtuelle dans ledit au moins un équipement, la machine virtuelle étant propre à imposer le deuxième fonctionnement audit au moins un équipement.

Suivant des modes de réalisation particuliers, le procédé de contrôle comprend une ou plusieurs des caractéristiques suivantes, prise(s) isolément ou suivant toute combinaison techniquement possible :
- les étapes d'optimisation et d'installation sont mises en oeuvre pour tous les équipements.
- le deuxième fonctionnement est distinct du premier fonctionnement.
- le deuxième fonctionnement est un ensemble de deuxièmes règles, une des deuxièmes règles étant d'imposer des échanges de communication entre un équipement et un autre équipement.
- le premier fonctionnement est un ensemble de premières règles et le deuxième fonctionnement est un ensemble de deuxièmes règles, les deuxièmes règles comprenant les premières règles.
- le deuxième fonctionnement est un ensemble de deuxièmes règles, une des deuxièmes règles étant d'imposer l'obtention de données provenant d'un autre équipement.
- le deuxième fonctionnement est un ensemble de deuxièmes règles, une des deuxièmes règles étant la mise en œuvre d'une action lorsqu'un critère est rempli, le critère impliquant des données provenant d'au moins deux équipements.
- le procédé comporte une étape d'envoi du deuxième fonctionnement par radiocommunication.

Il est aussi proposé un équipement domotique comportant un contrôleur propre à imposer un premier fonctionnement de l'équipement et une machine virtuelle propre à imposer un deuxième fonctionnement de l'équipement, le deuxième fonctionnement étant distinct du premier fonctionnement.

Il est également proposé une installation domotique comportant un organe de contrôle central et des équipements domotiques, au moins un équipement étant tel que précédemment décrit.

D'autres caractéristiques et avantages de l'invention apparaîtront à la lecture de la description qui suit de modes de réalisation de l'invention, donnée à titre d'exemple uniquement et en référence aux dessins qui sont :
- figure 1, une vue schématique d'un exemple d'installation domotique comportant un premier et un deuxième équipements domotiques,
- figure 2, une représentation schématique du premier équipement domotique de l'installation de la figure 1, et
- figure 3, une représentation schématique du deuxième équipement domotique de l'installation de la figure 1.

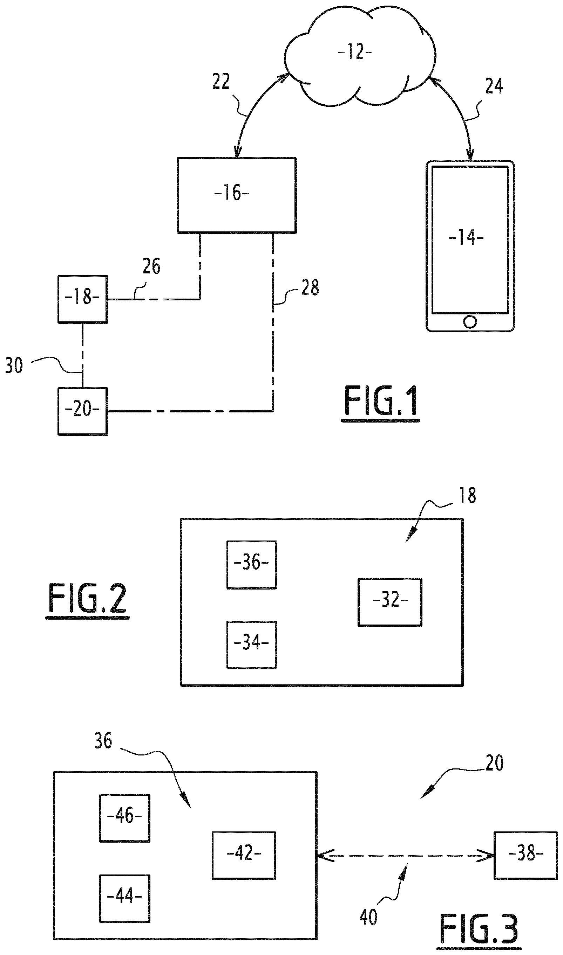

Une installation domotique 10, un réseau de communication 12 et une tablette 14 sont représentés sur la figure 1.

L'installation domotique 10 est simplement notée installation 10 dans le reste de la description.

Selon l'exemple représenté, l'installation 10 comporte un organe de contrôle central 16 et des équipements domotiques 18 et 20.

Dans le cadre de cette demande, la domotique est l'ensemble des techniques permettant de centraliser le contrôle des différents systèmes et sous-systèmes d'un habitat. Le chauffage, les volets roulants, le portail d'entrée ou les illuminations sont des exemples de tels systèmes.

L'expression « habitat communicant » est également utilisée pour désigner un tel ensemble de techniques.

L'installation 10 permet à un utilisateur de contrôler l'environnement. Plus précisément, l'installation 10 permet à l'utilisateur d'utiliser chaque équipement présent dans l'environnement pour en contrôler les paramètres, comme la température ou la luminosité.

L'environnement est une pièce ou un ensemble de pièce formant des locaux. La destination des locaux (personnelle ou professionnelle) est indifférente dans le cadre de cette description.

Dans l'exemple décrit, l'installation 10 est un ensemble d'équipements coopérant ensemble pour qu'un utilisateur par le biais de la tablette 14 puisse contrôler de manière centralisée chaque équipement.

L'installation 10 de la figure 1 est ainsi propre à communiquer avec le réseau de communication 12 et avec l'utilisateur par le biais d'une tablette 14.

Les échanges de communication entre l'installation 10 et le réseau de communication 12 sont symbolisés par un trait plein 22 dans la figure 1 et les échanges entre la tablette 14 et le réseau de communication 12 sont représentés sous la forme d'un trait plein 24 sur la figure 1.

Le réseau de communication 12 est, selon l'exemple proposé, un réseau global.

L'internet est un exemple de réseau global.

Le réseau de communication 12 permet l'accès à des sites.

La tablette 14 est un outil permettant à l'utilisateur d'entrer des données dans le réseau de communication 12.

Une tablette est un ordinateur portable ultraplat qui se présente sous la forme d'un écran tactile sans clavier et qui offre à peu près les mêmes fonctionnalités qu'un ordinateur personnel.

En variante, un clavier et un écran d'ordinateur sont utilisés à la place de la tablette 14.

Selon une autre variante, une télécommande est utilisée à la place de la tablette 14.

L'organe de contrôle central 16 est dénommé organe central 16 dans la suite de la description.

L'organe central 16 est propre à communiquer avec le premier équipement domotique 18 comme l'indique les traits mixtes 26 sur la figure 1.

L'organe central 16 est également propre à communiquer avec le deuxième équipement domotique 20. Les échanges de communication entre l'organe central 16 et le deuxième équipement domotique 20 sont notamment illustrés par les traits mixtes 28 sur la figure 1.

L'organe central 16 est, par exemple, un boîtier de connexion à internet.

L'organe central 16 est propre à communiquer avec le réseau de communication 12.

L'organe central 16 est ainsi une passerelle (aussi dénommée selon la terminologie anglaise de « gateway ») permettant de relier un réseau local formé par les équipements domotiques 18 et 20 et l'organe central 16 et le réseau de communication 12.

Un équipement domotique est un matériel interagissant avec l'environnement.

Un équipement domotique est parfois aussi appelée « objet ».

Un équipement domotique est, par exemple, un actionneur ou un capteur.

Un actionneur convertit l'énergie qui lui est fournie en travail. Par exemple, un dispositif électromécanique ou un vérin sont des actionneurs.

Par extension, un dispositif pourvu d'un relais ou d'un organe ayant la même fonction permettant d'activer un autre équipement est considéré comme un actionneur.

Un capteur permet de mesurer une grandeur.

Par exemple, le capteur est un capteur de luminosité, un capteur de température, un capteur d'effort, un capteur de vitesse, un capteur de déplacement ou un capteur de présence.

Dans l'exemple qui suit, à titre d'exemple non limitatif, les deux équipements 18 et 20 sont des capteurs.

Les équipements domotiques 18 et 20 sont propres à communiquer entre eux de manière autonome et reprogrammable.

Un équipement domotique est parfois aussi appelée « objet connecté».

Il est ainsi supposé dans la suite que les équipements domotiques sont propres à communiquer selon un protocole assurant une communication sans intermédiaire entre les équipements domotiques.

Plus spécifiquement, le protocole permet l'échange de messages au niveau applicatif entre deux équipements domotiques sans passage par l'organe central 16.

L'échange de tels messages est symbolisé par des traits mixtes 30 sur la figure 1.

Le protocole est, par exemple, un protocole convenant pour un réseau ad hoc.

Le premier équipement domotique 18 est représenté de manière plus détaillée à la figure 2.

Le premier équipement domotique 18 comporte un premier capteur 32, un premier contrôleur 34 et une première machine virtuelle 36.

Le premier capteur 32 est un capteur de mesure de la luminosité de l'environnement.

Le premier contrôleur 34 est usuellement qualifié de « microcontrôleur ».

Le premier contrôleur 34 est propre à imposer un premier fonctionnement du premier équipement domotique 18.

Par l'expression « fonctionnement », il est entendu un ensemble de règles.

Les règles déterminent à la fois le fonctionnement usuel du premier équipement domotique 18 (règles nominales) et le comportement du premier équipement domotique 18 en cas d'anomalies (règles de sécurité).

Par exemple, une règle nominale pour le premier capteur 32 est de transmettre la valeur de la luminosité instantanée au premier contrôleur 34.

Par contraste, une règle de sécurité est d'arrêter d'effectuer les mesures si la tension d'alimentation appliquée au premier capteur 32 est supérieure à une certaine valeur.

Le premier fonctionnement est appelé « fonctionnement de base » dans la suite de la description et les règles faisant partie du premier fonctionnement sont appelées premières règles.

La première machine virtuelle 36 est propre à imposer un deuxième fonctionnement du premier équipement domotique 18.

Il est à noter que la première machine virtuelle 36 et le premier contrôleur 34 s'exécutent sur un seul circuit électronique, la première machine virtuelle 36 étant sur une partie d'une mémoire du premier contrôleur 34.

De fait, en informatique, une machine virtuelle est un logiciel simulant la présence de ressources matérielles et logicielles pour exécuter des instructions logicielles dans les mêmes conditions que si ces ressources matérielles et logicielles étaient effectivement présentes.

De même que pour le premier fonctionnement, le deuxième fonctionnement est un ensemble de règles.

Le deuxième fonctionnement est appelé « fonctionnement émulé » dans la suite de la description et les règles faisant partie du deuxième fonctionnement sont appelées deuxièmes règles.

Le fonctionnement émulé du premier équipement domotique 18 est distinct du fonctionnement de base du premier équipement domotique 18.

Cela signifie qu'il existe au moins une règle du fonctionnement émulé qui est distincte d'une règle du fonctionnement de base. Par exemple, le fonctionnement émulé comporte une règle de plus que le fonctionnement de base.

Le deuxième équipement domotique 20 est représenté de manière plus détaillée à la figure 3.

Le deuxième équipement domotique 20 comporte un deuxième capteur 36 comportant deux parties.

La première partie 38 est propre à interagir, ainsi que le montre le trait en pointillés 40, avec la deuxième partie 42.

Dans l'exemple proposé, le deuxième capteur 36 est un capteur de présence.

La première partie 38 est une émetteur laser tandis que la deuxième partie 42 est une photodiode.

Le deuxième équipement domotique 20 comporte également un deuxième contrôleur 44 et une deuxième machine virtuelle 46.

Les mêmes remarques que pour le premier contrôleur 34 s'appliquent également pour le deuxième contrôleur 44. Similairement, les mêmes remarques que pour la première machine virtuelle 36 s'appliquent également pour la deuxième machine virtuelle 46. Ces remarques ne sont pas répétées dans ce qui suit.

Ainsi, le deuxième contrôleur 44 est propre à imposer un fonctionnement de base au deuxième équipement domotique 20 alors que la deuxième machine virtuelle 46 est propre à imposer un fonctionnement optimisé au deuxième équipement domotique 20.

Le fonctionnement de l'installation 10 est maintenant décrit en référence à un procédé de contrôle de l'installation 10.

Le procédé de contrôle de l'installation 10 comporte une phase d'initialisation et une phase d'exploitation.

La phase d'initialisation est d'abord décrite.

Selon l'exemple proposé, la phase d'initialisation du procédé de contrôle comporte cinq étapes : une première étape de fourniture, une deuxième étape de fourniture, une étape d'optimisation, une étape d'envoi et une étape d'installation.

Lors de la première étape de fourniture, l'utilisateur entre des informations dans l'organe central 16 via la tablette 14.

L'ensemble des informations entrées est un ensemble de règles définissant un fonctionnement souhaité de l'installation 10.

Dans certains cas, l'ensemble de règles relatives à l'installation 10 est qualifié de « scénario de fonctionnement » dans la mesure où chaque règle n'impose pas la manière dont le fonctionnement de l'installation 10 est mis en œuvre.

Selon l'exemple décrit, l'utilisateur interagit avec l'installation 10 via un service accessible via le réseau de communication 12.

En variante, l'interaction est obtenue par l'utilisation d'une application présente sur la tablette 14.

Dans d'autres modes de réalisation, l'application ou le service sont hébergés par l'organe central 16.

Pour la suite, il est supposé que le fonctionnement de l'installation 10 souhaité par l'utilisateur est le suivant : l'éclairage doit s'activer lorsque la luminosité est basse et que le passage d'une personne est détecté.

Lors de la deuxième étape de fourniture, l'organe central 16 collecte le fonctionnement de base de chaque équipement domotique 18 et 20.

Par exemple, le premier contrôleur 34 transmet à l'organe central 16 des règles par radiocommunication. L'ensemble des règles transmises est le fonctionnement de base du premier équipement domotique 18.

Similairement, le deuxième contrôleur 44 transmet par radiocommunication à l'organe central 16 des règles dont l'ensemble forme le fonctionnement de base du deuxième équipement domotique 20.

En variante, les communications sont mise en œuvre à l'aide d'une liaison filaire ou d'une liaison infrarouge.

Lors de l'étape d'optimisation, le fonctionnement de l'installation 10 est optimisé.

L'optimisation est effectuée sous la contrainte que le fonctionnement de l'installation 10 soit conforme au fonctionnement souhaité de l'installation 10.

Les variables de l'optimisation sont le fonctionnement d'au moins un des équipements domotiques 18 et 20 et de l'organe central 16, c'est-à-dire les règles qu'applique au moins l'un parmi les équipements domotiques 18 et 20 et l'organe central 16.

Selon l'exemple proposé, les variables de l'optimisation sont les fonctionnements de tous les équipements domotiques 18 et 20 de l'installation 10 et de l'organe central 16. Autrement formulé, les variables sont l'ensemble des règles qu'appliquent l'un parmi les équipements domotiques 18 et 20 et l'organe central 16.

L'optimisation est, par exemple, mise en œuvre à l'aide d'une fonction d'optimisation appliquée sur un point de départ.

Un point de départ est d'imposer que le fonctionnement de chaque équipement domotique 18 et 20 soit le fonctionnement de base fourni à la deuxième étape de fourniture et que le fonctionnement de l'organe central 16 permette à l'installation 10 de mettre en œuvre le fonctionnement souhaité.

Dans l'exemple présenté, le premier élément domotique 18 communique à l'organe central 16 chaque changement de luminosité au cours de la journée. Le deuxième élément domotique 20 communique à l'organe central 16 chaque passage d'une personne. L'organe central 16 décide d'activer l'éclairage selon le fonctionnement souhaité par l'utilisateur lorsque la condition d'une luminosité basse et du passage d'une personne est vérifiée.

De manière générale, la fonction d'optimisation permet de modifier le fonctionnement de base d'au moins un équipement, pour obtenir un fonctionnement optimisé dudit au moins un équipement domotique.

Dans l'exemple proposé, la fonction d'optimisation permet d'obtenir deux fonctionnements optimisés : un fonctionnement optimisé pour le premier équipement domotique 18 et un fonctionnement optimisé pour le deuxième équipement domotique 20.

Le fonctionnement optimisé est distinct du fonctionnement de base.

Par exemple, une des deuxièmes règles étant d'imposer des échanges de communication entre un équipement 18, 20 et un autre équipement 18, 20.

Avantageusement, les deuxièmes règles comprennent les premières règles. Cela permet de conserver la certification et la sécurité du fonctionnement de base de l'équipement 18 et 20.

En variante ou en complément, une des deuxièmes règles est d'imposer l'obtention de données provenant d'un autre équipement 18 et 20.

En variante ou en complément, une des deuxièmes règles est la mise en œuvre d'une action lorsqu'un critère est rempli, le critère impliquant des données provenant d'au moins deux équipements domotiques 18 et 20.

Selon l'exemple décrit, une règle du fonctionnement optimisé du premier élément domotique 18 est que le premier élément domotique 18 communique uniquement lorsque le seuil fixé par l'utilisateur est dépassé.

En outre, une deuxième règle est que deuxième élément domotique 20 communique uniquement lorsque la condition (luminosité basse et passage d'une personne) fixée par l'utilisateur est remplie.

Une autre deuxième règle est que le deuxième élément domotique 20 communique alors un ordre d'allumage ou d'extinction à l'organe central 16.

Lors de l'étape d'envoi, le fonctionnement optimisé est envoyé par radiocommunication depuis l'organe central 16 vers chaque équipement domotique 18 et 20 dont le fonctionnement a été optimisé.

Par exemple, l'étape d'envoi est mise en œuvre par envoi de bytecodes. Un bytecode est un code intermédiaire entre les instructions machines et le code source, qui n'est pas directement exécutable mais qui est exécutable par une machine virtuelle. Le bytecode peut être créé à la volée et résider en mémoire ou bien résider dans un fichier, généralement binaire qui représente le programme, tout comme un fichier de code objet produit par un compilateur.

Lors de l'étape d'installation, une machine virtuelle est installée dans chaque équipement dont le fonctionnement a été optimisé.

La machine virtuelle installée est propre à imposer le deuxième fonctionnement audit au moins un équipement.

Selon l'exemple proposé, la première machine virtuelle 36 et la deuxième machine virtuelle 46 sont installées respectivement dans le premier équipement domotique 18 et le deuxième équipement domotique 20.

L'installation 10 est maintenant prête à fonctionner, chaque équipement domotique 18 et 20 ayant été programmé pour appliquer les règles du fonctionnement de l'installation 10 qui les concerne.

Est alors mise en œuvre la phase d'exploitation.

Comme expliqué précédemment, le premier élément domotique 18 communique uniquement lorsque le seuil de luminosité fixé par l'utilisateur est dépassé.

Le deuxième élément domotique 20 communique uniquement lorsque la condition (luminosité basse et passage d'une personne) fixée par l'utilisateur est remplie.

Puis, le deuxième élément domotique 20 communique un ordre d'allumage ou d'extinction à l'organe central 16 de l'éclairage.

Le procédé permet ainsi de déporter une partie de l'intelligence d'un scénario domotique dans les équipements domotiques 18 et 20.

Plus précisément, certaines interactions entre les équipements domotiques 18 et 20 impliquent dans l'état de la technique une intervention d'un organe central 16. Les interactions sont prises en charge directement au niveau des équipements domotiques 18 et 20.

Cela permet d'éviter une dépendance au bon fonctionnement de l'organe central 16. Il en résulte que l'installation domotique 10 présente moins d'anomalies de fonctionnement.

L'éclairage, dans l'exemple proposé, fonctionne encore même si l'organe central 16 n'a pas accès au réseau de communication 12.

Dans le cas où l'organe central 16 est dans l'incapacité de fonctionner, l'éclairage continue également de fonctionner. De fait, l'éclairage fonctionne indépendamment de l'état de fonctionnement de l'organe central.

En outre, le nombre d'échanges avec l'organe central 16 est diminué, ce qui diminue les pollutions électromagnétiques.

De plus, le nombre de messages échangés est diminué, ce qui permet de moins consommer au niveau de chaque équipement domotique.

Le procédé reste transparent pour l'utilisateur qui configure le scénario de l'installation 10 de manière centralisée et non sur chaque équipement domotique, ce qui serait fastidieux.

En outre, le procédé permet de conserver une installation 10 flexible et évolutive. De fait, l'optimisation et la reprogrammation des équipements domotiques 18 et 20 sont contrôlées par l'organe central 16 et n'implique qu'une faible bande passante.

De plus, le fonctionnement de base de chaque équipement 18 et 20 est conservé, ce qui permet de respecter la réglementation.

En outre, l'utilisation d'une machine virtuelle 36, 46 augmente la sécurité puisque cela fournit une protection logicielle supplémentaire qui n'est usuellement pas présente.

La virtualisation permet également de limiter et contrôler l'accès à certaines ressources matérielles de l'équipement 18, 20. Par exemple, la virtualisation sert aussi à empêcher l'utilisation de bandes radio non réglementaires ou encore à prévenir un comportement qui viderait les piles très rapidement.

Il est également à noter que le procédé présente l'avantage d'être compatible avec la plupart des équipements domotiques présent sur le marché.

Plus précisément, l'emploi d'une machine virtuelle 36, 46 permet de s'abstraire du type de contrôleur 34, 44 utilisé. Le procédé est donc déployable sur des contrôleurs 34, 44 provenant de divers fabricants, sans avoir besoin d'envoyer de règles sous forme de code spécifique au contrôleur 34, 44 utilisé. Le procédé laisse ainsi la liberté aux concepteurs d'équipements 18, 20 d'utiliser les composants électroniques de leur choix.

En outre, le procédé est compatible avec les différentes configurations possibles de l'installation 10. En particulier, le type de liaison entre l'organe de contrôle central 16 et les équipements domotiques 18 et 20 et entre les équipements domotiques 18 et 20 est indifférent. Le procédé s'applique aussi bien à des liaisons filaires qu'à des liaisons sans fil. Une liaison par câble ou une liaison par courants porteurs en ligne (aussi désigné par l'acronyme CPL) sont des exemples de liaisons filaires. Il est également possible d'utiliser le procédé pour des liaisons de types différents selon les composants considérés. Par exemple, le procédé est compatible avec une liaison CPL entre l'organe de contrôle central 16 et les équipements domotiques 18 et 20 et une liaison sans fil entre les équipements domotiques 18 et 20.

## Revendications

1. Procédé de contrôle d'une installation domotique (10), l'installation (10) comportant des équipements domotiques (18, 20) et un organe de contrôle central (16), le procédé comportant une étape de :
- fourniture d'un fonctionnement souhaité de l'installation (10),
- fourniture d'un premier fonctionnement de chaque équipement domotique (18, 20),
- optimisation du fonctionnement de l'installation (10) par modification du premier fonctionnement d'au moins un équipement domotique (18, 20), pour obtenir un deuxième fonctionnement dudit au moins un équipement domotique (18, 20) et un fonctionnement de l'installation (10) conforme au fonctionnement souhaité,
caractérisé en que la méthode comporte une étape d'installation d'une machine virtuelle (36, 46) dans ledit au moins un équipement domotique (18, 20), la machine virtuelle (36, 46) étant propre à imposer le deuxième fonctionnement audit au moins un équipement domotique (18, 20).

2. Procédé selon la revendication 1, dans lequel les étapes d'optimisation et d'installation sont mises en œuvre pour tous les équipements domotique (18, 20).

3. Procédé selon la revendication 1 ou 2, dans lequel le deuxième fonctionnement est distinct du premier fonctionnement.

4. Procédé selon l'une quelconque des revendications 1 à 3, dans lequel le deuxième fonctionnement est un ensemble de deuxièmes règles, une des deuxièmes règles étant d'imposer des échanges de communication entre un équipement domotique (18, 20) et un autre équipement domotique (18, 20).

5. Procédé selon l'une quelconque des revendications 1 à 4, dans lequel le premier fonctionnement est un ensemble de premières règles et le deuxième fonctionnement est un ensemble de deuxièmes règles, les deuxièmes règles comprenant les premières règles.

6. Procédé selon l'une quelconque des revendications 1 à 5, dans lequel le deuxième fonctionnement est un ensemble de deuxièmes règles, une des deuxièmes règles étant d'imposer l'obtention de données provenant d'un autre équipement domotique (18, 20).

7. Procédé selon l'une quelconque des revendications 1 à 6, dans lequel le deuxième fonctionnement est un ensemble de deuxièmes règles, une des deuxièmes règles étant la mise en œuvre d'une action lorsqu'un critère est rempli, le critère impliquant des données provenant d'au moins deux équipements domotique (18, 20).

8. Procédé selon l'une quelconque des revendications 1 à 7, dans lequel le procédé comporte une étape d'envoi du deuxième fonctionnement par radiocommunication.

9. Equipement domotique (18, 20) comportant un contrôleur (34, 44) propre à imposer un premier fonctionnement de l'équipement (18, 20) et une machine virtuelle (36, 46) propre à imposer un deuxième fonctionnement de l'équipement (18, 20), le deuxième fonctionnement étant distinct du premier fonctionnement.

10. Installation domotique (10) comportant un organe de contrôle central (16) et des équipements domotiques (18, 20), au moins un équipement (18, 20) étant selon la revendication 9.

## Patentansprüche

1. Steuerverfahren einer Hausautomationsanlage (10), die Anlage (10) umfassend Hausautomationsgeräte (18, 20) und ein zentrales Steuerorgan (16), das Verfahren umfassend einen folgenden Schritt:
- Bereitstellen eines gewünschten Betriebs der Anlage (10),
- Bereitstellen eines ersten Betriebs jeder Heimautomationsgerät (18, 20),
- Optimieren des Betriebs der Anlage (10) durch Modifikation des ersten Betriebs von mindestens einem Hausautomationsgerät (18, 20), um einen zweiten Betrieb des mindestens einen Hausautomationsgeräts (18, 20) und einen Betrieb der Anlage (10) entsprechend dem gewünschten Betrieb zu erlangen, **dadurch gekennzeichnet, dass** das Verfahren einen Installationsschritt
einer virtuellen Maschine (36, 46) in dem mindestens einen Hausautomationsgerät (18, 20) umfasst, wobei die virtuelle Maschine (36, 46) geeignet ist, um dem mindestens einen Heimautomationsgerät (18, 20) den zweiten Betrieb aufzuerlegen.

2. Verfahren nach Anspruch 1, wobei die Optimierungs- und Installationsschritte für alle Heimautomationsgeräte (18, 20) durchgeführt werden.

3. Verfahren nach Anspruch 1 oder 2, wobei sich der zweite Betrieb von dem ersten Betrieb unterscheidet.

4. Verfahren nach einem der Ansprüche 1 bis 3, wobei der zweite Betrieb ein Satz von zweiten Regeln ist, wobei eine der zweiten Regeln darin besteht, einen Kommunikationsaustausch zwischen einem Heimautomationsgerät (18, 20) und einem anderen Heimautomationsgerät (18, 20) aufzuerlegen.

5. Verfahren nach einem der Ansprüche 1 bis 4, wobei der erste Betrieb ein Satz von ersten Regeln ist und der zweite Betrieb ein Satz von zweiten Regeln ist, die zweiten Regeln umfassend die ersten Regeln.

6. Verfahren nach einem der Ansprüche 1 bis 5, wobei der zweite Betrieb ein Satz von zweiten Regeln ist, wobei eine der zweiten Regeln darin besteht, ein Erlangen von Daten von einem anderen Heimautomationsgerät (18, 20) aufzuerlegen.

7. Verfahren nach einem der Ansprüche 1 bis 6, wobei die zweite Funktionsweise ein Satz von zweiten Regeln ist, wobei eine von den zweiten Regeln die Durchführung einer Aktion ist, wenn ein Kriterium erfüllt ist, wobei das Kriterium Daten impliziert, die von mindestens zwei Heimautomationsgeräten (18, 20) stammen.

8. Verfahren nach einem der Ansprüche 1 bis 7, wobei das Verfahren einen Schritt eines Sendens des zweiten Betriebs über Funk umfasst.

9. Heimautomationsgerät (18, 20), umfassend eine Steuerung (34, 44), die geeignet ist, um einen ersten Betrieb des Geräts (18, 20) aufzuerlegen, und einer virtuellen Maschine (36, 46), die geeignet ist, um einen zweiten Betrieb des Geräts (18, 20) aufzuerlegen, wobei sich der zweite Betrieb von dem ersten Betrieb unterscheidet.

10. Hausautomationsanlage (10), umfassend ein zentrales Steuerorgan (16) und Hausautomationsgeräte (18, 20), wobei mindestens ein Gerät (18, 20) nach Anspruch 9 ist.

## Claims

1. A method for controlling a home automation installation (10), the installation (10) including pieces of home automation equipment (18, 20) and a central control member (16), the method including a step for:
- providing a desired operation of the installation (10),
- providing a first operation of each piece of home automation equipment (18, 20),
- optimizing the operation of the installation (10) by modifying the first operation of at least one piece of home automation equipment (18, 20), to obtain a second operation of said at least one piece of home automation equipment (18, 20), and an operation of the installation (10) according to the desired operation,
**characterized in that** the method includes a step for installing a virtual machine (36, 46) in said at least one piece of home automation equipment (18, 20), the virtual machine (36, 46) being able to impose the second operation on said at least one piece of home automation equipment (18, 20).

2. The method according to claim 1, wherein the optimization and installation steps are carried out for all of the pieces of home automation equipment (18, 20).

3. The method according to claim 1 or 2, wherein the second operation is separate from the first operation.

4. The method according to any of the claims 1 to 3, wherein the second operation is a set of second rules, one of the second rules being to impose communication exchanges between a piece of home automation equipment (18, 20) and another piece of home automation equipment (18, 20).

5. The method according to any of the claims 1 to 4, wherein the first operation is a set of first rules and the second operation is a set of second rules, the second rules comprising the first rules.

6. The method according to any of the claims 1 to 5, wherein the second operation is a set of second rules, one of the second rules being to impose the obtainment of data coming from another piece of home automation equipment (18, 20).

7. The method according to any of the claims 1 to 6, wherein the second operation is a set of second rules, one of the second rules being the implementation of an action when a criterion is met, the criterion involving data from at least two pieces of home automation equipment (18, 20).

8. The method according any of the claims 1 to 7, wherein the method includes a step for sending the second operation by radiocommunication.

9. A piece of home automation equipment (18, 20) including a controller (34, 44) able to impose a first operation of the equipment (18, 20) and a virtual machine (36, 46) able to impose a second operation of the equipment (18, 20), the second operation being separate from the first operation.

10. A home automation installation (10) including a central control member (16) and pieces of home automation equipment (18, 20), at least one piece of equipment (18, 20) being according to claim 9.
